# EUROPEAN PATENT APPLICATION

(11) **EP 1 398 862 A2**
(43) Date of publication of application: **17.03.2004**
(21) Application number: 03017539.2
(22) Date of filing: 06.08.2003
(51) Int. Cl.: H02K 3/50, H01R 4/24

(54) **Connection terminal for the windings of a stator of an electric motor**

(30) Priority: 10.09.2002 IT PD20020230
(71) Applicant: INARCA S.p.A., I-35010 Vigodarzere (Province of Padova) (IT)
(72) Inventor: Boischio, Ido, 35100 Padova (IT)
(74) Representative: Modiano, Guido, Dr.-Ing.

(57) **Abstract**

A connection terminal particularly for the windings of a stator of an electric motor, comprising a body (11) made of blanked metal plate, shaped so as to form a termination (12) for connection to the wires (13) of the stator windings (14) that is adapted to be accommodated in a suitable pocket (22) of a female connector (23) that is fixed to the stator (19); the terminal comprises a cantilevered tab (15) that is adapted to constitute substantially a leaf spring for electrical connection.

## Description

The present invention relates to a connection terminal particularly for the windings of a stator of an electric motor.

As is known, for a long time manufacturers of electric motors have increasingly sought to automate their production, particularly by designing components that can be easily assembled automatically or semiautomatically.

One of the critical steps of the process for manufacturing electric motors is the connection of the stator windings to the power supply.

This connection in fact entails connecting one or more wires that protrude from the stator and must be connected to a corresponding number of wires that arrive from the power supply.

However, this connection must be safe in terms of layout, devoid of unwanted contacts and short-circuits, and must provide assurance to operators, both during assembly and during production, that application occurs easily and safely as regards any accidents.

The current trend is to eliminate connections provided by soldering, which as is known is a critical and delicate operation that requires specific equipment and a considerable expenditure of time.

In order to provide automatic assembly operations, many kinds of connector have been conceived and are currently commercially available which substantially have predefined receptacles for the connection terminals, which are anchored in various manners to the stator pack.

The evolution of these connectors, in any case, has not yet reached its optimum level.

Moreover, good flexibility of application is sometimes unavailable in relation to the type of motor to which they are applied.

The aim of the present invention is to provide a connection terminal for the windings of a stator of an electric motor that allows connection to electronic control boards, thermal protection devices, brushes et cetera, ensuring effective and safe electrical connection to the stator wires.

Within this aim, an object of the present invention is to provide a connection terminal that allows substantially automatic or semiautomatic assembly without the aid of soldering or connection cables.

Another object of the present invention is to provide a connection terminal that can be mass-manufactured and can be assembled automatically or semiautomatically.

Another object of the present invention is to provide a connection assembly that can be manufactured at competitive costs.

This aim and these and other objects that will become better apparent hereinafter are achieved by a connection terminal for the windings of a stator of an electric motor, which comprises a body made of blanked metal plate, shaped so as to form a termination for connection to the wires of the stator windings that is suitable to be accommodated in a suitable pocket of a female connector that is fixed to the stator, said terminal being characterized in that it comprises a cantilevered tab that is suitable to constitute substantially a leaf spring for electrical connection.

Further characteristics and advantages of the present invention will become better apparent from the following detailed description of an embodiment thereof and of corresponding variations, illustrated by way of non-limitative example in the accompanying drawings, wherein:

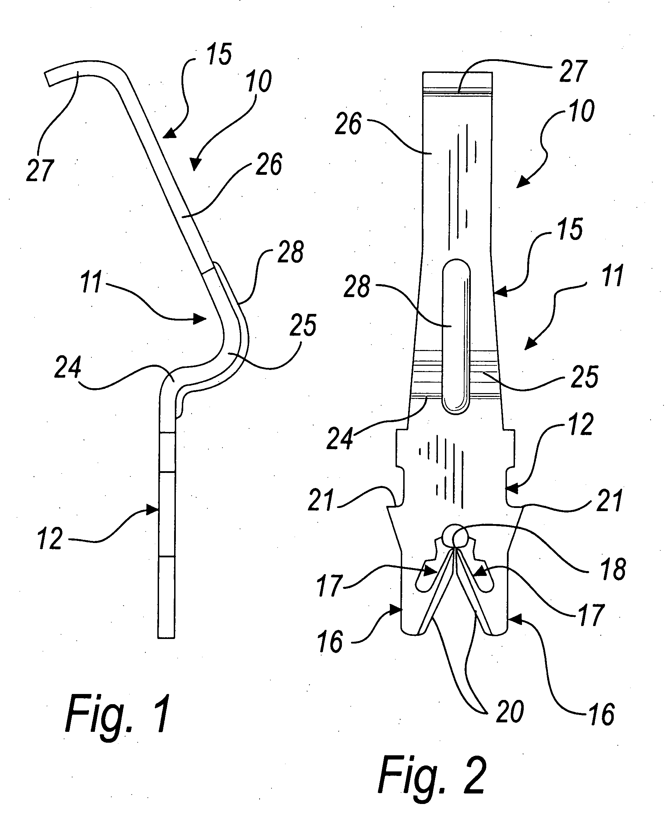

Figure 1 is an enlarged-scale side view of a terminal according to the invention;
Figure 2 is an enlarged-scale front view of the terminal of Figure 1;
Figure 3 is a sectional side view of a female connector for accommodating the terminal of Figure 1;
Figure 4 is a sectional front view of the connector of Figure 3;
Figure 5 is a top view of the connector of Figure 3;
Figure 6 is a sectional view of an electric motor in which the terminal of Figure 1 is applied and connected to an electronic control strip;
Figure 7 is a sectional view of an electric motor in which the terminal of Figure 1 is applied and rested on a thermal protection device;
Figure 8 is a sectional view of an electric motor in which the terminal of Figure 1 is applied and rested against a brush.

With reference to the figures, a connection terminal for the windings of a stator of an electric motor, according to the invention, is generally designated by the reference numeral 10 and is constituted by a body 11 made of blanked metal plate, which is shaped so as to form a termination 12 for connection to wires 13 of the stator windings, designated by the reference numeral 14, and a cantilevered tab 15.

The termination 12 is provided with mutually opposite L-shaped wings 16 with free ends 17 that mutually converge at the axis of the termination 12 so as to form a self-centering tapered seat 18 for accommodating a corresponding wire 13 of a stator 19.

In particular, the wings 16 are shaped at mutually facing edge portions 20 so as to form blades (designated by the same reference numeral) that are adapted to punch through the insulating sheath of the contained wire 13.

Further, the termination 12 is provided laterally with two mutually opposite retention teeth 21.

The termination 12 is adapted to be accommodated in an appropriately provided pocket 22 of a female connector 23, which is fixed to the stator 19 at the end regions of the windings 14.

The wires 13 are inserted so as to pass through the pockets 22 and the insertion of the termination 12 produces electrical connection by contact between the wires 13 and the wings 16.

The teeth 21 enter suitable undercuts, not shown in the figures, of the pockets 22, and stabilize the association of the terminals 10 with the connectors 23.

According to the invention, the cantilevered tab 15 protrudes axially from the termination 12 and substantially constitutes a leaf spring that has a curved contour.

Starting from the termination 12, said tab has in fact a curved portion 24, a complementarily curved portion 25, an inclined straight portion 26, and another final curved portion 27 that has the same orientation as the complementary curved portion 25.

At the curved portion 24 and at the complementarily curved portion 25 there is a central longitudinal contoured stiffening portion 28, provided by cambering by plastic deformation a portion of the tab 15.

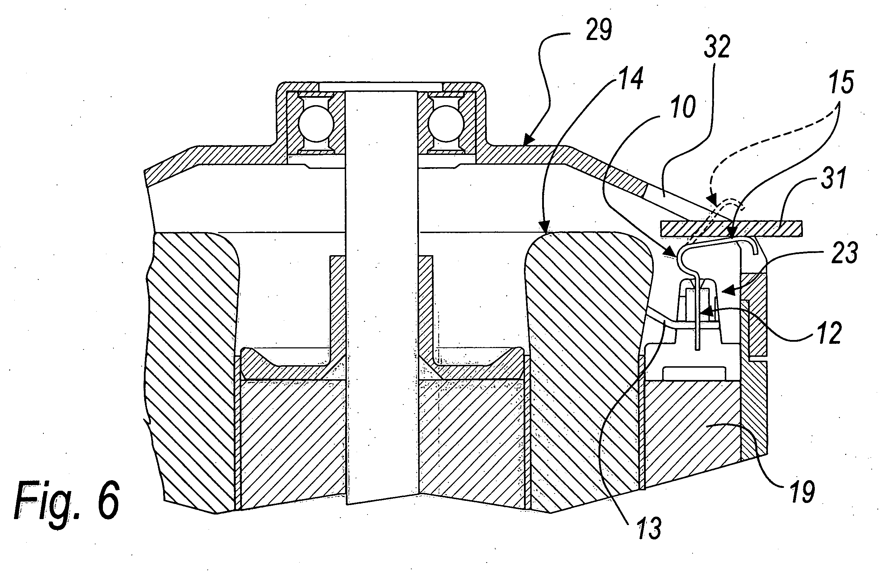

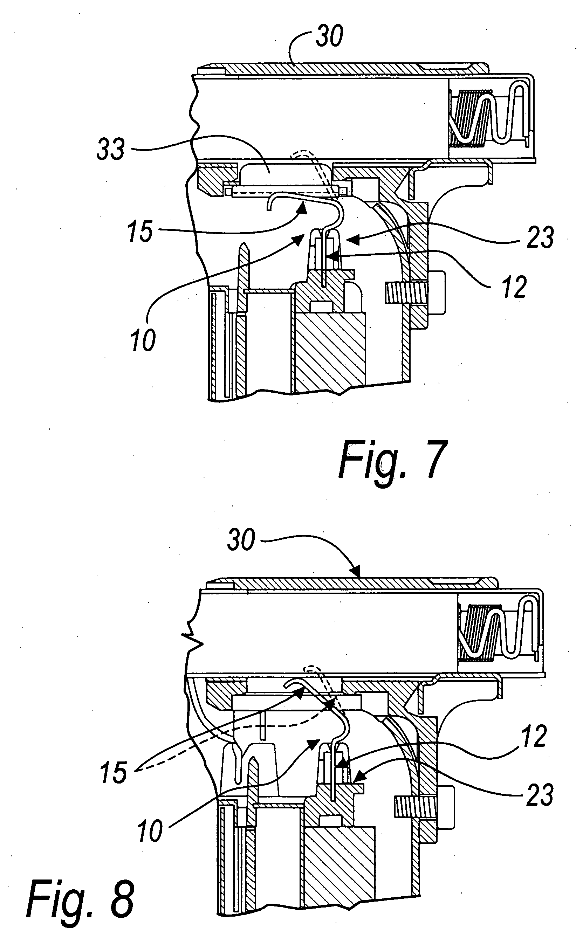

The tab 15 protrudes from the pocket 22 of the connector 23, when the terminal 10 is inserted, toward the end of the stator 19, for example a head 29 as shown in Figure 6, or the brush holder 30 as in Figures 7 and 8.

In the first case (Figure 6), electrical connection is provided with a corresponding track (not shown in the figure) of an electronic strip 31 that is inserted in the head 29 through a suitable hole 32 and is fixed thereto.

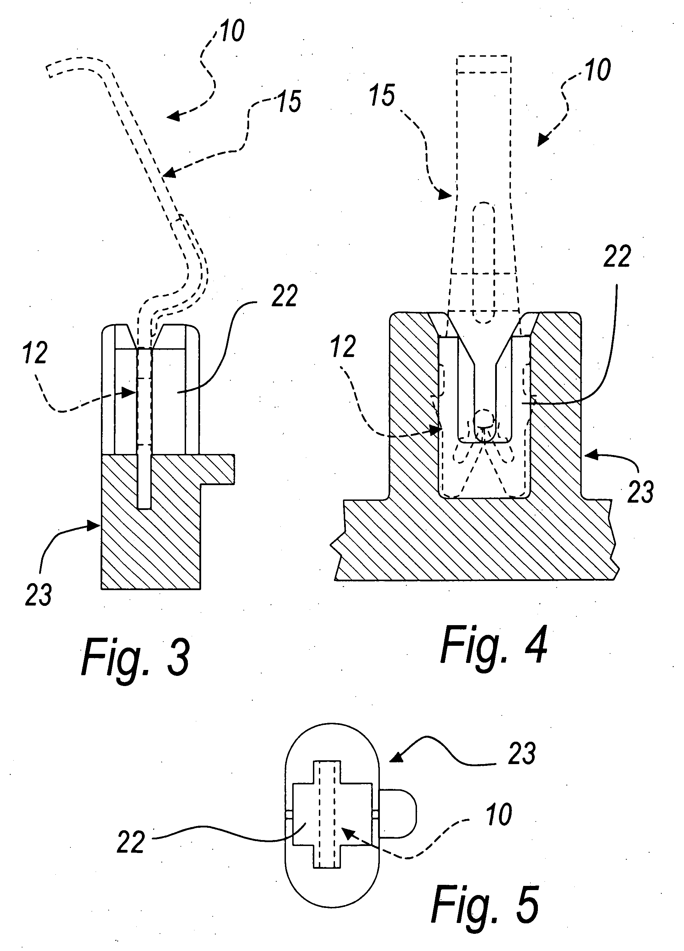

Contact is provided by way of the resting, with elastic flexural deformation, of the tab 15 as shown by the dashed lines of Figure 5.

In the second case (Figure 7), resting against the thermal protection device 33 is provided; in the third case (Figure 8), resting against a brush 34 is provided, always in the same manner as in the first case.

In practice it has been found that the present invention has achieved the intended aim and objects.

It should in fact be noted that the connection terminal allows connection to electronic control boards, thermal protection devices, brushes et cetera, ensuring an effective and safe electrical connection to the stator wires, eliminating cables.

Further, it allows substantially automatic or semiautomatic assembly without the aid of soldering and can itself be mass-manufactured and assembled in an automated or semiautomated manner.

The present invention is susceptible of numerous modifications and variations, all of which are within the scope of the appended claims.

The technical details may be replaced with other technically equivalent elements.

The materials and the dimensions may be any according to requirements.

The disclosures in Italian Patent Application No. PD2002A000230 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A connection terminal for the windings of a stator of an electric motor, comprising a body (11) made of blanked metal plate, shaped so as to form a termination (12) for connection to the wires (13) of the stator windings (14) that is adapted to be accommodated in a suitable pocket (22) of a female connector (23) that is fixed to the stator (19), said terminal being **characterized in that** it comprises a cantilevered tab (15) that is suitable to constitute substantially a leaf spring for electrical connection.

2. The connection terminal according to claim 1, **characterized in that** said cantilevered tab (15) constitutes substantially a leaf spring that has a curved contour.

3. The connection terminal according to claim 2, **characterized in that** said cantilevered tab (15), starting from said termination (12), has a curved protrusion (24), a complementarily curved portion (25), an inclined straight portion (26), and another final curved portion (27) that has the same orientation as said complementarily curved portion (25).

4. The connection terminal according to claim 3, **characterized in that** said cantilevered tab (15) has, at said curved portion (24) and said complementarily curved portion (25), a central longitudinal contoured stiffening portion (28) obtained by cambering by plastic deformation a portion of said tab (15).

5. An electric motor on which at least one terminal according to one or more of the preceding claims is fitted, **characterized in that** it comprises a stator (19) with a female connector (23) in which said termination (12) of said terminal is stably inserted, said tab (15) protruding from a corresponding pocket (22) of the connector (23) toward a head (29) for connection on a corresponding track of an electronic strip (31), said contact being provided by way of the resting of said tab (15) with elastic flexural deformation.

6. An electric motor on which at least one terminal according to one or more of claims 1 to 4 is fitted, **characterized in that** it comprises a stator (19) with a female connector (23) in which said termination (12) of said terminal is stably inserted, said tab (15) protruding from a corresponding pocket (22) of the connector (23) toward a head (29) for resting on a thermal protection device (33) with elastic flexural deformation of said tab (15).

7. An electric motor on which at least one terminal according to one or more of claims 1 to 4 is fitted, **characterized in that** it comprises a stator (19) with a female connector (23) in which said termination (12) of said terminal is stably inserted, said tab (15) protruding from a corresponding pocket (22) of the connector (23) toward a head (29) for resting on a brush (34) by way of elastic flexural deformation of said tab (15).
